Europäisches Patentamt

European Patent Office

Office européen des brevets

(19)

(11) Numéro de publication: **0 274 954**
**A1**

(12) **DEMANDE DE BREVET EUROPEEN**

(21) Numéro de dépôt: 87402898.8

(22) Date de dépôt: 17.12.87

(51) Int. Cl.⁴ **H04M 11/08** , H04M 11/04 , H04M 11/00

(30) Priorité: 17.12.86 FR 8617716

(43) Date de publication de la demande:
20.07.88 Bulletin 88/29

(84) Etats contractants désignés:
**AT BE CH DE ES GB GR IT LI LU NL SE**

(71) Demandeur: **SOCIETE GENERALE
D'INNOVATION GENOVA
27, rue Longjumeau
Massy Essonne(FR)**

(72) Inventeur: **Pecontal, Georges
27, rue de Longjumeau
Massy Essonne(FR)**
Inventeur: **Guérin, Marc Jean François
3, rue Xaintrailles
F-75013 Paris(FR)**
Inventeur: **Marinot, Laurent Yves André
33, rue des Ardennes
F-75019 Paris(FR)**

(74) Mandataire: **Rataboul, Michel Charles
CMR INTERNATIONAL 69, rue de Richelieu
F-75002 Paris(FR)**

(54) **Procédé pour la transmission d'informations par des lignes et/ou des réseaux spécialisés, et installation pour la mise en oeuvre de ce procédé.**

(57) Le procédé selon l'invention concerne la transmission d'informations sous forme de signaux électriques depuis un centre serveur 10 vers chacun de plusieurs terminaux éloignés 33 et depuis chacun de ceux-ci vers le centre serveur 10 au moyen de lignes notamment téléphoniques 31 et/ou de réseau spécialisé 21.

Il est caractérisé en ce que l'on prévoit des informations destinées aux terminaux 33 et des informations destinées à au moins une catégorie d'appareils périphériques 50-51 distincts des terminaux 33, que l'on relie au moins certains de ceux-ci à au moins un appareil périphérique individuel 50-51 d'au moins une catégorie, que l'on envoie depuis le centre serveur 10 vers tous les terminaux 33 en marche les signaux correspondant aux informations destinées auxdits terminaux 33 et que l'on n'envoie des signaux correspondant à des informations destinées à des appareils périphériques 50-51 qu'aux seuls terminaux 33 associés à de tels appareils périphériques 50-51 eux-mêmes en marche, selon des séquences différenciées par des signaux codés, qu'on lit à chaque terminal 33 relié à au moins un appareil périphérique 50-51 tous les signaux qui y aboutissent, que l'on extrait sélectivement ceux de ces signaux qui sont destinés à un, respectivement chaque, appareil périphérique 50-51 en marche, que l'on dirige lesdits signaux vers l'appareil 50-51 voulu afin que les informations du terminal 33 et celles de l'appareil périphérique 50-51 puissent être fournies simultanément, et que l'on envoie éventuellement des signaux au centre serveur 10 soit à partir d'un terminal 33, soit à partir d'un appareil périphérique 50-51.

FIG.1

EP 0 274 954 A1

# PROCEDE POUR LA TRANSMISSION D'INFORMATIONS PAR DES LIGNES ET/OU DES RESEAUX SPECIALISES, ET INSTALLATION POUR LA MISE EN OEUVRE DE CE PROCEDE

La présente invention concerne un procédé qui permet de compléter, d'améliorer une installation téléinformatique existante sans modifier les caractéristiques d'origine.

Cela permet, par exemple, de transmettre des informations supplémentaires sans perturber la transmission standard.

On connaît l'installation qui comprend des centres serveurs et des terminaux éloignés permettant d'accéder sélectivement à chacun des centres serveurs auxquels les terminaux sont reliés d'abord par des lignes téléphoniques puis par un réseau spécialisé. En France, une telle installation a été créée par l'Administration des Télécommunications : les abonnés disposent, pour chaque ligne d'abonnement, d'un terminal nommé "MINITEL" branché sur une prise et associé à un combiné téléphonique standard. Le terminal comprend un écran de visualisation, un clavier, un modulateur-démodulateur et un port susceptible de recevoir une fiche de raccordement pour un appareil périphérique tel qu'une imprimante, un lecteur de carte à mémoire etc. commandé non à partir d'un centre serveur mais localement. Les informations transitent par les lignes téléphoniques et par un réseau spécialisé nommé "TRANSPAC". La vitesse de transmission sur les lignes téléphoniques est faible : 1200 bauds pour des raisons structurelles très difficiles à modifier et tenant essentiellement à la fréquence électrique du signal de base. Le réseau "TRANSPAC" utilise aussi des lignes, mais ayant été créé spécialement pour la téléinformatique, il fonctionne à fréquence plus élevée et à une vitesse de transmission beaucoup plus grande.

La présente invention permet d'accroître considérablement les performances d'une installation de ce type puisqu'elle permet, notamment, de gérer plusieurs appareils périphériques à chaque terminal à partir des centres serveurs et cela malgré les conditions de transmission défavorables imposées par les caractéristiques des lignes.

L'invention s'écarte donc des solutions connues selon lesquelles il faut créer une structure spéciale : réseau et appareils ainsi qu'une programmation spécifiques, comme cela est décrit notamment dans la demande de brevet européen 0 194 143.

Grâce à la présente invention, au contraire, un réseau banal, quelconque devient "multi-réseau" sans aucune modification de structure, en utilisant les mêmes codes et sans programme d'ensemble. Le centre serveur envoie des signaux classiques, sans programme, et on prévoit un adressage "transparent" pour les non-destinataires, l'absence d'adressage signifiant que les codes considérés sont destinés au fonctionnement courant de l'ensemble de base.

A cette fin, l'invention a pour objet un procédé pour la transmission d'informations sous forme de signaux électriques depuis un centre serveur vers chacun de plusieurs terminaux éloignés et depuis chacun de ceux-ci vers le centre serveur au moyen de lignes notamment téléphoniques et/ou de réseau spécialisé, caractérisé en ce que l'on prévoit des informations destinées aux terminaux et des informations destinées à au moins une catégorie d'appareils périphériques distincts des terminaux, que l'on relie au moins certains de ceux-ci à au moins un appareil périphérique individuel d'au moins une catégorie, que l'on envoie depuis le centre serveur vers tous les terminaux en marche les signaux correspondant aux informations destinées auxdits terminaux et que l'on n'envoie des signaux correspondant à des informations destinées à des appareils périphériques qu'aux seuls terminaux associés à de tels appareils périphériques eux-mêmes en marche, selon des séquences différenciées par des signaux codés, qu'on lit à chaque terminal relié à au moins un appareil périphérique tous les signaux qui y aboutissent, que l'on extrait sélectivement ceux de ces signaux qui sont destinés à un, respectivement chaque, appareil périphérique en marche, que l'on dirige lesdits signaux vers l'appareil voulu afin que les informations du terminal et celles de l'appareil périphérique puissent être fournies simultanément, et que l'on envoie éventuellement des signaux au centre serveur soit à partir d'un terminal, soit à partir d'un appareil périphérique.

Selon d'autres caractéristiques de ce procédé :

- les signaux destinés à au moins un appareil périphérique ont une relation avec ceux destinés au terminal correspondant afin d'en compléter l'intelligibilité par un usager;

- les signaux destinés à au moins un appareil périphérique sont destinés à commander un dispositif étranger à l'installation, tel qu'un appareil ménager, une alarme ou autre;

- on envoie des signaux depuis soit un terminal soit un appareil périphérique relié à un terminal à destination soit d'un autre terminal soit d'un autre appareil périphérique relié audit autre terminal, par l'intermédiaire du centre serveur;

- les lignes et/ou réseau spécialisé faisant partie d'une installation pré-existante dont les normes prévoient une unité de transmission limitée à un nombre de bits inférieur au nombre désiré pour chaque multiplet des signaux correspondant à des informations destinées à un appareil périphérique, on tronçonne les multiplets en fractions égales entre elles et toutes au plus égales au nombre de bits maximum admis par l'installation pré-existante et l'on répartit les bits nécessaires sur les différentes fractions, celles-ci étant liées par un signal de parité;

- certaines fractions comportant des bits dits "de poids faible" et d'autres des bits dits "de poids fort", les bits de même catégorie des différents multiplets correspondent toujours à des informations de même signification telle que adresse de destination pour une catégorie de bits et message lui-même pour une autre catégorie;

- le terminal devant fonctionner avec des codes de commandes donnés, on prévoit des messages codés destinés à rendre le terminal insensible à ces messages pendant que des messages contenant ces codes sont émis à destination d'un appareil périphérique.

L'invention a également pour objet une installation pour la mise en oeuvre du procédé ci-dessus, du type comprenant un centre serveur relié à des terminaux par des lignes et/ou un réseau spécialisé susceptibles de transmettre de serveur vers chacun des terminaux et de chacun de ceux-ci vers le serveur des signaux électriques correspondant à des informations intelligibles par un usager, caractérisée en ce que certains terminaux sont reliés par une liaison fonctionnelle à un dispositif susceptible d'effectuer la lecture permanente de tous les signaux électriques aboutissant au terminal, d'en sélectionner certains selon des critères pré-établis et de diriger des signaux soit vers un dispositif standard de délivrance d'informations, tel qu'un écran, faisant partie du terminal, soit vers au moins un appareil périphérique individuel.

Selon d'autres caractéristiques de cette installation :

- le terminal étant du type muni d'un port, le dispositif susceptible d'effectuer la lecture permanente de tous les signaux est constitué par un coffret indépendant muni d'une part d'un câble et d'une fiche de raccordement au port et d'autre part d'au moins une prise destinée au raccordement d'un appareil périphérique, ce dispositif comprenant un aiguilleur destiné à diriger des signaux sélectivement vers le dispositif standard de délivrance d'informations ou vers chacune des prises;

- le terminal est muni d'un dispositif de mise en marche automatique sensible à des signaux provenant soit du centre serveur, soit d'un appareil périphérique;

- le centre serveur est équipé de moyens, notamment logiciels, susceptibles de transférer vers un terminal des informations reçues d'un autre, éventuellement après habilitation par délivrance d'un code d'accès;

- l'un au moins des appareils périphériques comprend des moyens susceptibles de créer des signaux significatifs devant être envoyés au centre serveur à partir du terminal associé audit appareil périphérique.

L'invention sera mieux comprise par la description détaillée ci-après faite en référence au dessin annexé. Bien entendu, la description et le dessin ne sont donnés qu'à titre d'exemple indicatif et non limitatif.

La figure 1 est un schéma d'une installation conforme à l'invention montrant un seul terminal associé à un aiguilleur pour plusieurs appareils périphériques.

La figure 2 est un schéma d'une installation conforme à l'invention montrant deux terminaux dont l'un est associé à un aiguilleur pour plusieurs appareils périphériques, dont l'un au moins est susceptible d'être commandé à partir de l'autre terminal, via un centre serveur.

La figure 3 est un schéma d'une installation conforme à l'invention montrant un seul terminal associé à un aiguilleur pour plusieurs appareils périphériques dont l'un au moins est susceptible de créer des signaux destinés à un centre serveur.

Une installation selon l'invention comprend un centre serveur 10 auquel aboutissent un grand nombre de connexions symbolisées par de courts rayons 20. L'une de ces connexions est représentée par une ligne 21 reliée à un centre de télétransmission 22. Une interruption 23 montre que la ligne 21 peut aussi bien être une liaison physique telle qu'un câble, qu'une liaison immatérielle notamment par ondes électromagnétiques et satellite (non représenté). L'ensemble des connexions 20, de la ligne 21 et du centre de télétransmission 22 constitue un réseau spécialisé. Il peut être de tout type connu et en particulier le réseau français "TRANSPAC".

Au centre 22, aboutissent un grand nombre de lignes 30 correspondant chacune à un usager, notamment des lignes téléphoniques pour des abonnés. L'une d'elles, 31, est représentée comme aboutissant à une prise 32 dans laquelle est placée une fiche dite "gigogne" raccordée à un terminal 33 et devant recevoir une fiche pour un combiné téléphonique 34. Le terminal 33 peut être de tout type connu et en particulier un appareil français "MINITEL". Il comprend un modulateur-démodulateur (non représenté), un écran 35, un clavier 36 et un port 37 susceptible de recevoir une fiche de raccordement pour un appareil périphérique (non représenté) tel qu'une imprimante.

L'ensemble centre serveur 10-réseau spécialisé 20-22-lignes 30-31-terminal 33-combiné 34 peut être utilisé de manière autonome, indépendamment de l'invention. On peut rappeler que son fonctionnement standard permet le choix entre deux processus :

- Le combiné 34 est utilisé comme n'importe quel téléphone. Quand l'usager le décroche, il entend la tonalité et compose ses numéros d'appel. Naturellement, l'usager peut être appelé et lorsque cela se produit, il entend la sonnerie habituelle. Tout se passe donc exactement comme si le terminal 33 n'existait pas.

- Le terminal 33 doit être utilisé. C'est le cas notamment quand l'usager cherche les coordonnées d'un correspondant (service connu en France sous le nom de "ANNUAIRE ELECTRONIQUE") ou quand l'usager veut accéder à une banque de données que l'on supposera ici gérée par le centre serveur 10. Pour cela, l'usager décroche le combiné 34, compose un numéro de téléphone pour accéder au centre 10 et, parallèlement, met le terminal en marche au moyen d'un bouton MARCHE-ARRET. Lorsque la liaison téléphonique est possible (ligne libre par exemple), l'usager maneouvre une touche du clavier 36 pour obtenir la connexion entre le centre serveur 10 et le terminal 33. Un message s'affiche à l'écran et l'usager raccroche le combiné 34 et suit alors une procédure plus ou moins complexe prévoyant ou pas une preuve de son habilitation selon le prix du service rendu, sa confidentialité etc. par exemple en composant des codes éventuellement confidentiels, le tout à partir du terminal, c'est-à-dire en manipulant le clavier 36, en relation avec les informations apparaissant en clair sur l'écran 35. Lorsque l'usager a terminé, il tape une touche du clavier 36 qui provoque la déconnexion et il manoeuvre le bouton "MARCHE-ARRET".

Avec ce fonctionnement standard, les signaux transmis par les lignes 21 et 31 sont d'une seule catégorie. Ceux qui proviennent du centre serveur 10 sont destinés au seul terminal 33 et ceux qui proviennent du terminal 33 sont destinés au centre serveur 10. L'usager peut, s'il le désire, brancher un appareil périphérique au port 37 mais cet appareil est géré par lui même ou par le terminal 33. Quand le périphérique est géré par lui-même, il n'y a pas d'aiguillages internes au terminal 33, lequel se trouve en quelque sorte neutralisé : le périphérique devient alors un terminal à lui tout seul. Quand le périphérique est géré par le terminal 33, les informations disponibles au port 37 sont celles du terminal 33 et celles qui proviennent de l'appareil périphérique via le port 37 sont destinées au terminal 33.

En d'autres termes, ce terminal 33 se compose de quatre éléments essentiels : l'écran 35, le clavier 36, le modulateur-démodulateur dit "modem" (non représenté) et le port 37, le tout géré par un noyau central appelé "protocole", qui interprête les codes de commande et effectue les divers aiguillages entre ces quatre éléments propres.

A la mise sous tension (MARCHE-ARRET), le terminal se trouve en "mode local" et les aiguillages sont :
- clavier vers le modem et vers le port 37,
- port 37 et modem vers l'écran 35,
- modem rebouclé sur lui-même.

En mode local, les caractères tapés au clavier 36 sont envoyés vers l'écran 35, vers le port 37, et vers le modem rebouclé. Donc, tous les caractères envoyés au port 37 sont affichés à l'écran 35. Ce mode permet d'utiliser le terminal 33 en "half-duplex". S'agissant d'un MINITEL, sa vitesse de traitement est de 1200 bauds et son unité de transmission de sept bits, plus un bit de parité paire.

Après prise de la ligne téléphonique 31 et manoeuvre de la touche de connexion, le terminal est en "mode connexion" et les aiguillages sont :
- modem vers le réseau téléphonique (ligne 31 par la prise 32),
- modem vers l'écran 35 et vers le port 37,
- port 37 vers le modem,
- clavier 36 vers le modem.

En mode connexion, les caractères reçus par le modem sont envoyés à la fois vers l'écran 35 et vers le port 37, c'est-à-dire que les caractères reçus par le modem sont affichés à l'écran 35 alors que les caractères reçus par le port 37 en provenance d'un appareil estérieur branché sur lui sont transmis au modem sans être affichés.

Selon la présente invention, on prévoit au moins deux catégories de signaux transitant par les lignes 21 et 31 et correspondant à des informations dont certaines sont propre_ au terminal (donc destinées à l'affichage à l'écran 35) et d'autres sont propres à des appareils périphériques branchés sur le port 37 (donc exclues de l'affichage à l'écran 35).

L'invention prévoit donc la gestion des appareils périphériques par le centre serveur et non par le terminal, la lecture permanente de tous les signaux parvenant au terminal, le tri des signaux et leur envoi sélectif selon des aiguillages spécifiques.

Selon l'invention, on doit donc modifier les aiguillages internes de chaque terminal afin de pouvoir sélectionner les caractères destinés à l'affichage à l'écran. Cela est possible par l'envoi au terminal considéré, soit par le modem, soit par le port 37, de séquences particulières de caractères.

Pour supprimer la liaison clavier 36-modem, il faut envoyer par le port 37 la séquence d'instructions suivante :

1-supression d'aiguillage,

2-code réception du modem,

3-code d'émission du clavier.

Le clavier 36 devient inactif puisqu'il n'est plus relié au modem.

Pour sélectionner et extraire une chaîne de caractères signalée par un code particulier, afin d'empêcher qu'elle soit affichée à l'écran 35 qu'elle perturberait, il faut modifier les aiguillages standards pour qu'ils soient établis ainsi :

1-modem vers port 37,

2-port 37 vers écran 35,

3-clavier 36 vers modem.

Ainsi, tout caractère reçu par le terminal est dirigé uniquement vers le port 37. L'interface qui y est connectée renvoie éventuellement ce caractère à l'écran pour affichage. Pour obtenir cette configuration, il faut envoyer les instructions correspondant à :

1-suppression de la liaison port 37-modem,

2-suppression de la liaison modem-écran 35,

3-réalisation de la liaison port 37-écran 35.

4-restauration de la liaison port 37-modem.

On remarque que ces actions se passent au niveau du terminal 33 mais proviennent soit du centre serveur 10, soit d'un appareil périphérique via le port 37.

Pour sélectionner les caractères devant être affichés à l'écran 35 et ceux destinés au port 37 et de là à un appareil périphérique extérieur, selon les instructions provenant du centre serveur 10, il faut prévoir un code soit pour l'une seulement des catégories de caractères, soit pour les deux. Naturellement, il est plus simple de n'avoir qu'un seul code et c'est le cas retenu ici : tout signal (ou bit, ou caractère) est par principe envoyé à l'écran. selon les aiguillages normaux du terminal 33. Dès que se présente le code, les aiguillages sont changés et tous les caractères qui suivent sont envoyés au seul port 37 à destination de l'appareil périphérique voulu connecté à ce port 37 et cela jusqu'à apparition d'un code qui annule le précédent et remet le terminal 33 dans sa configuration standard selon laquelle les caractères qui arrivent sont envoyés à l'écran 35 pour affichage, le clavier 36 étant actif pour le modem afin de reconstituer le situation conversationnelle normale directe (éventuellement neutralisée selon la phase de fonctionnement, bien entendu) entre le terminal 33 et le centre serveur 10.

Lorsqu'il s'agit d'un MINITEL raccordé au réseau TRANSPAC, il est impératif que le code de commande soit une séquence de commutation de mode constituée de caractères ASCII imprimables respectant la norme de codage dite "VIDEOTEX". Afin d'éviter toute perturbation qui résulterait d'un ambiguité entre des caractères imprimables qui seraient affichés à l'écran 35 et ne provoqueraient aucune commutation et le code qui non seulement ne doit pas apparaître à l'écran mais doit en outre commander une commutation, il est bon de choisir des caractères qui jamais ne se retrouvent dans un texte normal. On peut, par exemple, choisir comme code un groupe de trois lettres minuscules et en l'occurrence "vvv". Comme ces caractères ne doivent pas apparaître à l'écran 35, il faut travailler avec une file d'attente permettant d'intercepter la chaîne "vvv".

Il faut rappeler que lors de la mise sous tension, le terminal fonctionne en mode normal ("mode local" pour un MINITEL), de sorte que tous les caractères reçus par le modem via la prise 32 sont envoyés à l'écran 35 pour affichage. Dès qu'apparaît la chaîne "vvv", la commutation des liaisons s'effectue et le terminal passe en "mode périphérique" selon lequel les caractères reçus par le modem via la prise 32 sont envoyés au port 37 et non à l'écran 35.

Il peut se faire que l'unité de transmission de l'installation préexistante soit trop faible pour les nouveaux besoins nés de la transformation selon l'invention. C'est le cas du MINITEL qui travaille en octets dont un bit de parité. Il ne reste donc que sept bits disponibles alors que pour la mise en oeuvre satisfaisante de l'invention on souhaite recevoir au port 37 n'importe quel caractère compris entre OO et FF.

Pour vaincre cet obstacle, on peut prévoir selon l'invention de tronçonner chaque octet en deux quartets. Les quatre bits de poids fort (les quatre premiers) constituent un demi-octet contenant l'adresse de l'appareil périphérique voulu tandis que les quatre bits de poids faible (les quatre derniers) constituent un demi-octet contenant les données.

Supposons que le centre serveur 10 souhaite envoyer la séquence ABCD au périphérique No. zéro. dont le code binaire est 4.

Pour la séquence ABCD on a les codes binaires suivants :

| A | B | C | D |
|---|---|---|---|
| 41 | 42 | 43 | 44 |

D'où les huit quartets suivants :

| 4 | 1 | 4 | 2 | 4 | 3 | 4 | · | 4 |

A ces bits de poids faible, on ajoute l'adresse du périphérique en poids fort :

| 4 4 | 4 1 | 4 4 | 4 2 | 4 4 | 4 3 | 4 4 | 4 4 |

Selon la norme de codage VIDEOTEX, le message complet (ou chaîne codée) devient :
... vvv DADBDCDD fin de séquence ...

On remarque que chaque donnée figurant dans un quartet est précédée par un quartet indiquant l'adresse de destination. Les quartets sont appairés pour reconstituer un octet.

On peut aussi agir différemment : lorsque le serveur 10 doit envoyer une chaîne codée à un périphérique, il envoie un message ayant pour effet de neutralier le terminal 33, ou plus exactement pour empêcher ce dernier d'interpréter pour lui un nombre de caractères indiqués. Le message signifie en clair : "les $x$ caractères suivants doivent être lus et interprêtés par le périphérique No. $z$ et non par le terminal". Cela donne une plus grande variété de messages. En effet, dans le premier cas, on ne peut pas utiliser des codes déjà pris pour le terminal 33. Lorsqu'il s'agit d'un MINITEL, par exemple, celui-ci utilise les codes compris entre 0 et 31. Ceux destinés au périphérique ne peuvent donc commencer qu'au-delà. Si l'on adopte la seconde solution proposée ici, on neutralise les codes 0 à 31 pour le terminal qui y devient insensible et ils deviennent disponibles pour le périphérique, en plus des autres.

L'invention se concrétise par une carte comprenant les composants électroniques suivants :
- un microprocesseur,
- une mémoire type "reprom" contenant le logiciel,
- deux interfaces,
- un décodeur d'adresse,
- un circuit d'interfaçage,
- un circuit de remise à zéro ("reset"),
- un circuit de remise à zéro ("reset") pour les composants.

Cette carte est alimentée de manière habituelle, bien connue de l'homme de métier.

Naturellement, ces composants sont donnés à titre indicatif et peuvent être remplacés par intégration de circuits.

La carte est raccordée à une source d'énergie et au terminal 33. Quand l'usager appelle le centre serveur 10 après les manoeuvre de mise en route et de connexion banales, ce dernier envoie un message qui s'affiche à l'écran 35 pour demander à l'usager si le terminal 33 est associé à tel ou tel appareil périphérique. Si l'usager répond "NON", le centre serveur n'envoie que des signaux standards pour un terminal 33 simple. Si l'usager répond "OUI", le centre serveur 10 envoie un message qui s'affiche à l'écran 35 et rappelant à l'usager qu'il doit mettre l'appareil périphérique sous tension. Lorsque cela est fait, l'usager continue la procédure de connexion et/ou d'habilitation jusqu'à ce que le centre serveur 10 émette des signaux, Ceux-ci, comme on l'a expliqué plus haut, contiennent des séquences pour le terminal 33 (affichage à l'écran 35, liaison clavier 36-modem) et des séquences destinées à l'appareil périphérique. Si l'usager a répondu "OUI" par erreur ou s'il a oublié de mettre l'appareil périphérique sous tension, les séquences destinées à cet appareil sont envoyées à l'écran qui est totalement perturbé puisqu'il se couvre de caractères dénués de toute signification en clair. L'usager doit alors faire une remise à zéro et recommencer les procédures.

Si le terminal 33 contient une mémoire vive accessible (ce qui est le cas du MINITEL), on peut adopter un autre processus : le programme du serveur 10 ne questionne pas l'usager par un message en clair s'affichant à l'écran. Le programme prévoit d'interroger la mémoire vive du terminal 33 dans laquelle s'est inscrit automatiquement un message indiquant la présence d'un appareil périphérique dès que celui-ci a été mis sous tension. Cette solution est plus simple pour l'usager qui n'a plus aucune initiative à prendre autre que celle, banale et évidente, de mettre son ou ses périphériques sous tension.

Il est possible de prévoir des extensions, soit en ajoutant des cartes au terminal, soit en connectant au port 37 un ensemble électronique ad hoc, dont la réalisation, pour mettre en oeuvre l'invention décrite, est à la portée de l'homme de métier.

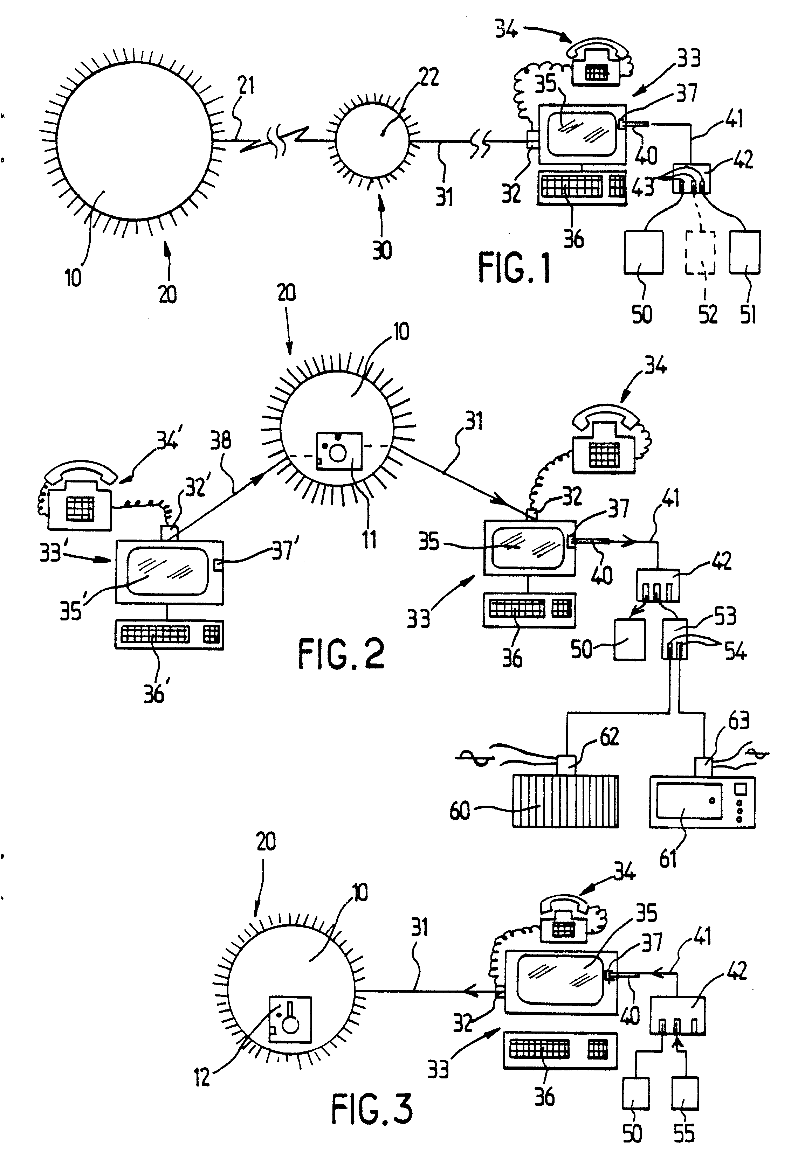

Sur la figure 1, on a représenté une installation selon laquelle le port 37 reçoit une fiche 40 pour un câble 41 appartenant à un ensemble 42 contenant les composants électroniques nécessaires au fonctionnement de l'invention telle qu'elle a été décrite plus haut (en particulier un aiguilleur pour les passages du "mode local" en "mode périphérique"). En outre, l'ensemble 42 contient un aiguilleur pour diriger les signaux reçus par l'ensemble 42 vers l'une de plusieurs prises 43 (ici trois) dans chacune desquelles peut être connecté un appareil périphérique. On a représenté ici un appareil 50 qui peut être un synthétiseur de voix et un appareil 51 qui peut être un écran pour graphiques en couleurs etc. Un appareil 52 pourrait aussi être connecté à la prise 43 du milieu mais il est représenté en pointillés pour figurer qu'il n'existe pas dans le montage prévu ici.

Le fonctionnement de cette installation est le suivant :

- le centre serveur 10 a posé à l'usager les questions voulues pour s'assurer que le terminal 33 est associé à un appareil type 50, type 51 et type 52.

- l'usager a répondu correctement : "OUI" pour l'appareil 50, "OUI" pour l'appareil 51 et "NON" pour l'appareil 52. Deux réponses positives au moins signifient que l'usager dispose donc d'un ensemble 42 à aiguilleur.

- l'usager peut alors dialoguer avec le centre serveur 10 qui fonctionnera selon plusieurs possibilités simultanées : données pour le terminal 33 simple, données pour l'appareil 50, données pour l'appareil 51 et aucune donnée pour l'appareil 52. La lecture, la sélection et l'aiguillage se font automatiquement comme indiqué plus haut.

Naturellement, il est possible de n'utiliser qu'un seul appareil périphérique, par exemple le synthétiseur de voix 50. Dans ce cas, sa fiche est connectée directement au port 37, l'ensemble 42 devenant inutile. L'aiguilleur se contente de diriger sélectivement les données soit à l'écran 35, soit au port 37 pour le seul appareil 50.

En se reportant à la figure 2, on voit une installation conforme à l'invention, selon un autre mode de réalisation.

Les mêmes éléments que ceux de la figure 1 portent les mêmes références.

Le schéma retenu illustre la possibilité que l'invention procure de commander des appareils périphériques d'un terminal 33 à partir d'un autre terminal 33', via le centre serveur 10. Cela suppose que ce dernier comporte un logiciel spécifique que l'on a symbolisé par la représentation d'une disquette 11.

Le fonctionnement de cette installation est évidemment le même que celui de la précédente tant que n'intervient que la seule liaison entre le centre serveur 10 et le terminal 33 entouré de ses périphériques. En revanche, il est différent et procure des avantages supplémentaires lorsque l'on fait intervenir le terminal 33'. On ne décrira donc que ce dernier cas.

Lorsque l'usager du terminal 33 utilise l'installation comme celle de la figure 1, les périphériques 50 et 51 sont gérés par le centre serveur 10, de manière essentiellement automatique, soit spontanément, soit en réponse à un acte de l'usager, selon des programmes plus ou moins complexes. Avec l'installation de la figure 2, l'usager est éloigné du terminal 33 et peut agir volontairement, indépendamment de tout programme. On peut donc prévoir des appareils périphériques étrangers à l'informatique.

On voit que l'ensemble 42 reçoit d'une part le synthétiseur de voix 50 qui fonctionne de manière coordonnée avec le terminal 33 et d'autre part un dispositif 53 lui-même muni de deux prises 54 pour recevoir des fiches de connexion d'un ou deux appareils fonctionnant par tout ou rien tel qu'un radiateur de chauffage 60 et un four 61 reliés à une source de courant avec interposition d'un interrupteur "MARCHE-ARRET" respectivement 62 et 63 actionnés par le dispositif 53

Le fonctionnement de cette installation vis-à-vis du dispositif 53 est le suivant :

- l'usager, éloigné de l'endroit où se trouve le terminal 33 et ses périphériques, désire y accéder. Pour cela, il doit disposer d'un terminal 33' relié au centre serveur 10. Par souci de simplification, on élimine ici l'interposition d'un réseau spécialisé 30. La liaison du terminal 33' est symbolisée par une ligne 38. L'usager effec tue la procédure habituelle de connexion et, après habilitation, accède au logiciel 11 qui lui permet d'envoyer des messages au terminal 33 par la ligne 31. Les données circulent dans le sens des flèches depuis le terminal 33' jusqu'au terminal 33. Celui-ci peut être équipé, comme cela est connu en soi, d'un mécanisme automatique de mise en service afin d'être opérationnel dès réception d'un message. L'usager actionne les touches du calvier 36' et vérifie que ses données sont correctes puis, après validation éventuelle, commande leur envoi au centre serveur 10. Le logiciel 11 traite ces données, identifie la ligne 31 comme correspondant au terminal 33 en cause, evoie un message de mise sous tension, puis la séquence "vvv" pour aiguiller les séquences suivantes vers le seul port 37 jusqu'à l'ensemble 42. Celui-ci identifie les codes d'adresse et aiguille les données vers le dispositif 53. A son tour, ce dernier identifie l'adresse pour celle de ses prises 54 correspondant soit au radiateur 60, soit au four 61 et manoeuvre l'interrupteur 62 ou l'interrupteur 63 et les deux, l'un après l'autre selon les ordres reçus. Il peut s'agir aussi bien de mettre ces appareil en route que de les arrêter.

Comme cela est connu en soi, on peut prévoir un messagé de retour du terminal 33 vers le terminal 33' soit pour signaler un incident rendant impossible la manoeuvre souhaitée, soit pour confirmer sa bonne exécution.

Sur la figure 3, on a représenté un autre mode de réalisation qui prévoit un autre sens de fonctionnement.

Les mêmes éléments que ceux des figures 1 et 2 portent les mêmes références.

L'ensemble 42 reçoit le synthétiseur de voix 50 qui fonctionne en synchronisme avec le terminal 33, comme décrit plus haut. Il reçoit en outre un appareil 55 actif localement. Il peut s'agir, notamment, d'un système de détection et d'alarme.

Lorsque ce système détecte une anomalie, il génère un signal qui transite dans le sens des flèches pour parvenir au terminal 33 via l'ensemble 42 et le port 37. Il provoque éventuellement la mise sous tension du terminal 33 et l'aiguillage du port 37 vers le modem, la prise 32 et la ligne 31 jusqu'au centre serveur 10. Ce dernier possède un logiciel symbolisé par une disquette 12 qui est conçu pour gérer les messages issus de tous les appareils de type 55. Il peut s'agir de déclencher une sirène sur les lieux où s'est produit l'anomalie, et/ou d'avertir un poste de vigiles et/ou d'avertir un poste de police, et/ou de déclencher une installation contre l'incendie et/ou de commander l'actionnement d'issues etc.

Dès lors que l'usager accède au serveur 10 et que celui-ci gère les périphériques, on peut prévoir des programmes privés, conçus par les usagers, accessibles par ceux-ci pour modification ou annulation et gérés par le serveur 10. Chaque usager peut ainsi programmer des interventions simples ou complexes, fréquentes ou rares : allumage d'appareils, simulation de présence, télésurveillance et vérifications, rappels de délais, envoi de messages à des destinataires extérieurs pour des opérations de débit de comptes, de passation de commandes, de réservation de places etc. un intérêt important de ce système étant la possibilité de bénéficier des possibilités immenses d'un puissant ensemble informatique fonctionnant en permanence, même en l'absence de l'usager, et à partir d'un terminal comparativement très frustre.

On voit que grâce à l'invention, on peut non seulement compléter les possibilités du terminal 33 dans les fonctions qui le concernent mais aussi de lui faire jouer des rôles tout à fait différents de ceux pour lesquels il a été conçu : transmetteur de messages dans un sens comme dans l'autre.

S'agissant du MINITEL, en particulier, on peut rendre celui-ci sonore. Le synthétiseur de voix peut accompagner les textes affichés à l'écran par une voix coordonnée ou intervenir indépendamment pour s'adresser directement à l'usager : messages publicitaires, informations générales ou particulières au centre serveur etc. On peut aussi utiliser en périphérique au MINITEL un moniteur en couleurs et bien entendu une imprimante, un lecteur de "code a barres", un lecteur de carte à mémoire etc. Avec une imprimante, on peut aussi prévoir un telex automatique et simultané : l'usager utilise le terminal 33 comme il souhaite : messagerie, jeux, consultation de banques de données etc. et s'il arrive un telex pour lui, celui-ci apparaît sur l'imprimante.

Les messages destinés au terminal et ceux destinés à un périphérique sont mélangés de manière optimum pour assurer un apparente simultanéité. On sait en effet que les temps de transmission de bits sont imperceptibles pour un usager, de sorte qu'il ne peut pas percevoir de décalages entre les messages du terminal 33 et ceux d'un périphérique si le découpage des messages est fin : il faut donc éviter des trop longs messages et au contraire les entrecouper au maximum. Mais dans la réalité technique, il y a un décalage et donc un allongement des temps de transmission. Pour minimiser cet allongement, notamment dans le cas particulier d'un long telex, il est préférable que l'usager qui voit un texte s'imprimer, interrompe le travail du terminal 33. La transmission à partir du serveur 10 est alors exclusivement consacrée aux messages destinés à l'imprimante qui bénéficient du maximum possible de vitesse de transmission (1200 bauds pour un MINITEL).

Bien entendu, on peut obtenir une réelle simultanéité si l'on trie les messages pour les envoyer dans des "buffers", c'est-à-dire des mémoires-tampon. Les messages de destinations différentes sont stockés des des buffers différents et ceux-ci sont vidés en même temps. Mais on comprend que cette simultanéité techniquement réelle s'obtient au prix d'un ralentissement puisque la délivrance de tous les messages se fait selon la durée du plus long d'entre eux et après entrée puis sortie de buffer.

## Revendications

1-Procédé pour la transmission d'informations sous forme de signaux électriques depuis un centre serveur (10) vers chacun de plusieurs terminaux éloignés (33-33') et depuis chacun de ceux-ci vers le centre serveur (10) au moyen de lignes notamment téléphoniques (31-38) et/ou de réseau spécialisé (21), caractérisé en ce que l'on prévoit des informations destinées aux terminaux (33-33') et des informations destinées à au moins une catégorie d'appareils périphériques (42-50-51-52-53-55) distincts des terminaux (33-33'), que l'on relie au moins certains de ceux-ci à au moins un appareil périphérique individuel (42-50-51-52-53-55) d'au moins une catégorie, que l'on envoie depuis le centre serveur (10) vers tous les terminaux (33) en marche les signaux correspondant aux informations destinées auxdits terminaux (33-33') et que l'on n'envoie des signaux correspondant à des informations destinées à des appareils périphériques (42-50-51-52-53-55) qu'aux seuls terminaux (33) associés à de tels appareils périphériques (42-50-51-52-53-55) eux-mêmes en marche, selon des séquences différenciées par des signaux codés, qu'on lit à chaque terminal (33) relié à au moins un appareil périphérique (42-50-51-52-53-55) tous les signaux qui y aboutissent, que l'on extrait sélectivement ceux de ces signaux qui sont destinés à un, respectivement chaque, appareil périphérique (42-50-51-52-53-55) en marche, que l'on dirige lesdits signaux vers l'appareil (42-50-51-52-53-55) voulu afin que les informations du terminal (33) et celles de l'appareil périphérique (42-50-51-52-53-55) puissent être fournies simultanément, et que l'on envoie éventuellement des signaux au centre serveur (10) soit à partir d'un terminal (33-33'), soit à partir d'un appareil périphérique (55).

2-Procédé selon la revendication 1, caractérisé en ce que les signaux destinés à au moins un appareil périphérique (50-51) ont une relation avec ceux destinés au terminal (33) correspondant afin d'en compléter l'intelligibilité par un usager.

3-Procédé selon la revendication 1, caractérisé en ce que les signaux destinés à au moins un appareil périphérique (53) sont destinés à commander un dispositif étranger à l'installation, tel qu'un appareil ménager (60 61), une alarme (55) ou autre.

4-Procédé selon la revendication 1, caractérisé en ce que l'on envoie des signaux depuis soit un terminal (33') soit un appareil périphérique relié à un terminal (33') à destination soit d'un autre terminal (33) soit d'un autre appareil périphérique (53) relié audit autre terminal (33), par l'intermédiaire du centre serveur (10-11).

5-Procédé selon la revendication 1, caractérisé en ce que les lignes (31-38) et/ou réseau spécialisé (20-21-22) faisant partie d'une installation pré-existante dont les normes prévoient une unité de transmission limitée à un nombre de bits inférieur au nombre désiré pour chaque multiplet des signaux correspondant à des informations destinées à un appareil périphérique (42-50-51-52-53-55), on tronçonne les multiplets en fractions égales entre elles et toutes au plus égales au nombre de bits maximum admis par l'installation pré-existante et l'on répartit les bits nécessaires sur les différentes fractions, celles-ci étant liées par un signal de parité.

6-Procédé selon la revendication 5 caractérisé en ce que certaines fractions comportant des bits dits "de poids faible" et d'autres des bits dits " de poids fort", les bits de même catégorie des différents multiplets correspondent toujours à des informations de même signification telle que adresse de destination pour une catégorie de bits et message lui-même pour une autre catégorie.

7-Procédé selon la revendication 1, caractérisé en ce que le terminal (33) devant fonctionner avec des codes de commandes donnés, on prévoit des messages codés destinés à rendre le terminal (33) insensible à ces messages pendant que des messages contenant ces codes sont émis à destination d'un appareil périphérique.

8-Installation pour la mise en oeuvre du procédé de la revendication 1 ci-dessus, du type comprenant un centre serveur (10) relié à des terminaux (33-33') par des lignes (31-38) et/ou un réseau spécialisé (20-21-22) susceptibles de transmettre du serveur (10) vers chacun des terminaux (33-33') et de chacun de ceux-ci vers le serveur (10) des signaux électriques correspondant à des informations intelligibles par un usager, caractérisée en ce que certains terminaux (33) sont reliés par une liaison fonctionnelle à un dispositif susceptible d'effectuer la lecture permanente de tous les signaux électriques aboutissant au terminal (33), d'en sélectionner certains selon des critères pré-établis et de diriger des signaux soit vers un dispositif standard de délivrance d'informations, tel qu'un écran (35), faisant partie du terminal (33), soit vers au moins un appareil périphérique (42-50-51-52-53-55) individuel.

9-Installation selon la revendication 8, caractérisée en ce que le terminal (33) étant du type muni d'un port (37), le dispositif susceptible d'effectuer la lecture permanente de tous les signaux est constitué par un coffret indépendant (42) muni d'une part d'un câble (41) et d'une fiche (40) de raccordement au port (37) et d'autre part d'au moins une prise (43) destinée au raccordement d'un appareil périphérique (50-51-52). ce dispositif (42) comprenant un aiguilleur destiné à diriger des signaux sélectivement vers le dispositif standard de délivrance d'informations (35) ou vers chacune des prises (43).

10-Installation selon la revendication 8, <u>caractérisée</u> <u>en</u> <u>ce</u> <u>que</u> le terminal (33) est muni d'un dispositif de mise en marche automatique sensible à des signaux provenant soit du centre serveur (10), soit d'un appareil périphérique (55).

11-Installation selon la revendication 8, <u>caractérisée</u> <u>en</u> <u>ce</u> <u>que</u> le centre serveur (10) est équipé de moyens, notamment logiciels (11), susceptibles de transférer vers un terminal (33) des informations reçues d'un autre (33'), éventuellement après habilitation par délivrance d'un code d'accès.

12-Installation selon la revendication 8, <u>caractérisée</u> <u>en</u> <u>ce</u> <u>que</u> l'un au moins des appareils périphériques (55) comprend des moyens susceptibles de créer des signaux significatifs devant être envoyés au centre serveur (10) à partir du terminal (33) associé audit appareil périphérique (55).

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | EP-A-0 194 143 (SONY)<br>* Résumé; page 2, ligne 29 - page 5, ligne 13 * | 1-3,7-10,12 | H 04 M 11/08<br>H 04 M 11/04<br>H 04 M 11/00 |
| Y | | 4-6,11 | |
| Y | FR-A-2 562 289 (HATALA)<br>* Résumé; page 1, lignes 21-27; page 4, lignes 12-24 * | 4,11 | |
| Y | ON LINE CONFERENCE ON VIDEOTEX, VIEWDATA AND TELEXT, 1980, pages 399-411; E.C. SEDMAN: "The use of microcobol for telesoftware"<br>* Page 402, lignes 20-24 * | 5,6 | |
| A | DE-A-2 950 952 (SIEMENS)<br>* Page 5, lignes 9-37 * | 1,3,8 | |

| | |
|---|---|
| | DOMAINES TECHNIQUES RECHERCHES (Int. Cl.4) |
| | H 04 M |

Le présent rapport a été établi pour toutes les revendications

| Lieu de la recherche | Date d'achèvement de la recherche | Examinateur |
|---|---|---|
| LA HAYE | 08-03-1988 | MIKKELSEN C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03.82 (P0402)